# EUROPÄISCHE PATENTSCHRIFT

(11) **EP 2 255 345 B1**
(45) Veröffentlichungstag und Bekanntmachung des Hinweises auf die Patenterteilung: **12.10.2011**
(21) Anmeldenummer: 08718195.4
(22) Anmeldetag: 26.03.2008
(51) Int. Cl.: G08B 17/00

(54) **GEFAHRMELDER MIT EINEM VARIABLEN AUFNAHMEBEREICH FÜR EIN VERSORGUNGSELEMENT**
DANGER SENSOR WITH VARIABLE DETECTION RANGE FOR A SUPPLY ELEMENT
DÉTECTEUR DE DANGER À ZONE DE RÉCEPTION VARIABLE POUR UN ÉLÉMENT D'ALIMENTATION

(43) Veröffentlichungstag der Anmeldung: 01.12.2010
(73) Patentinhaber: Siemens Aktiengesellschaft, 80333 München (DE)
(72) Erfinder: AEBERSOLD, Hans, CH-8906 Bonstetten (CH); NYIKOS, Matthias, CH-6330 Cham (CH); LIEBERT, Wolf, CH-5416 Kirchdorf (CH)
(86) Internationale Anmeldenummer: PCT/EP2008/053512
(87) Internationale Veröffentlichungsnummer: WO 2009/118040

(56) Entgegenhaltungen:
- DE-U1-202005 016 596
- GB-A- 2 263 810
- JP-A- 2007 324 032

## Beschreibung

Die vorliegende Erfindung betrifft das technische Gebiet der Gefahrmeldetechnik.

Aus der GB 2 263 810 A ist ein Batteriegehäuse für einen Rauchmelder offenbart, welcher an der Befestigungsseite des Rauchmelders einen Batteriedeckel zum Öffnen eines Batteriefachs des Rauchmelders aufweist. Das Batteriefach dient zur Aufnahme herkömmlicher Batterien, wie z.B. eine E-Blocks.

Aus der DE 20 2005 016 596 U1 ist ein Gefahrenmelder mit einem zweiteiligen Gehäuse aus einem Deckenbefestigungsteil und aus einem daran lösbar zu befestigenden unteren Gehäuseteil bekannt. Das Gehäuse weist ferner zwei sich überlappende Wände, eine Batterie sowie einen Sensor und einen Alarmgeber auf. In einem zwischen den beiden Gehäuseteilen gebildeten Raum ist eine Batterie aufgenommen.

Aus der JP 2007 324032 A ist ein Batteriefach zur Aufnahme einer oder mehrerer Rundzellen-Batterien bekannt. Das Batteriefach ist Teil eines Hauptgehäuses eines Apparates. Das Batteriefach weist federnde oder nachgiebige Elemente auf, so dass Rundzellen unterschiedlicher Länge oder Durchmesser im Batteriefach aufgenommen werden können.

Neben Brandmelder, die über ein Stromkabel mit elektrischer Energie versorgt werden, gibt es Brandmelder, die mit einer oder mit mehreren Batterien betrieben werden. Dies ist vor allem dann der Fall, wenn die Brandmelder über eine drahtlose Kommunikationsverbindung mit einer Brandzentrale verbunden sind.

Die Lebensdauer einer Batterie oder eines Batterie-Paketes mit mehreren Batterien hängt jedoch üblicherweise stark von der Qualität der jeweiligen Funkstrecke ab. Über die Funkstrecke wird von professionellen Brandmeldern in regelmäßigen Intervallen von beispielsweise 3 Sekunden ein Signal an die Brandzentrale übermittelt, mit dem der Brandzentrale signalisiert wird, dass der Brandmelder in Betrieb ist aber aktuell keine Gefahrensituation vorliegt.

Insbesondere aufgrund unterschiedlicher Funkstrecken ist es jedoch nicht unüblich, dass die Batterie-Lebensdauer wesentlich kürzer ist als das normale Serviceintervall, in dem die betreffenden Brandmelder beispielsweise auf Verschmutzungen und Verstaubungen untersucht werden, die so stark sind, dass sie von dem Signalauswertealgorithmus des jeweiligen Brandmelders nicht mehr kompensiert werden können. Deshalb ist es sinnvoll, Brandmelder mit unterschiedlichen Batterie-Paketen mit jeweils einer unterschiedlichen Leistung anzubieten.

Bei Brandmeldern möchte man beispielsweise aus ästhetischen Gründen einen möglichst kleinen Einbauraum und aus finanziellen Gründen möglichst günstige (d.h. kleine) Batterien verwenden. Der Brandmelder wird demzufolge auf der Basis des kleinsten Batterie-Paketes für die minimale Batterielebensdauer zur Erfüllung der für batteriebetriebene Brandmelder relevanten Norm EN54-25 konstruiert. Für eine längere Lebensdauer mit längeren Batteriewechsel-Intervallen müssen andere Batterien verwendet werden. Meist sind dies Batterien mit einem größeren Volumen.

Bekannte batteriebetriebene Brandmelder werden aus Kostengründen nur mit Batterien einer Art und Größe geliefert. Hierbei wird meist ein Kompromiss zwischen dem benötigten Einbauraum, den Kosten und der Batteriegröße bzw. der Batterielebensdauer eingegangen.

Der Erfindung liegt die Aufgabe zugrunde, die Stromversorgung eines batteriebetriebenen Gefahrmelders dahingehend zu verbessern, dass auf einfache und effektive Weise unterschiedliche große Batterien verwendet werden können, ohne dass dadurch die Kompaktheit der räumlichen Abmessungen des Gefahrmelders auf unnötige Weise reduziert wird.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Gefahrmelder beschrieben. Der Gefahrmelder weist auf (a) ein erstes Gehäuseteil, (b) ein zweites Gehäuseteil, (c) eine Detektoreinheit zum Detektieren einer Gefahrensituation, wobei die Detektoreinheit in oder an dem ersten Gehäuseteil angeordnet ist, (d) einen elektrischen Anschluss zum Anschließen von zumindest einem Versorgungselement, welches die Detektoreinheit im Betrieb mit elektrischer Energie versorgt. Das erste Gehäuseteil ist zusammen mit dem zweiten Gehäuseteil derart ausgebildet, dass zwischen den beiden Gehäuseteilen ein Aufnahmebereich für das zumindest ein Versorgungselement vorhanden ist, und dass das Volumen des Aufnahmebereichs mittels eines Volumenanpassungselements veränderbar ist.

Dem beschriebenen Gefahrmelder liegt die Erkenntnis zugrunde, dass durch die gezielte Ausgestaltung der beiden Gehäuseteile insbesondere in den Teilbereichen, die im zusammengebauten Zustand des Gefahrmelders einander zugewandt sind, durch die Verwendung eines in geeigneter Weise ausgebildeten bzw. ausgeformten Volumenanpassungselements das Volumen des Aufnahmebereichs gezielt an das aktuell verwendete Versorgungselement angepasst werden kann. Dadurch kann ein und derselbe Gefahrenmelder mit verschieden großen Versorgungselementen betrieben werden.

Das Versorgungselement kann beispielsweise eine Einwegbatterie oder eine wieder aufladbare Batterie wie beispielsweise ein Akku sein. Außerdem können mehrere Versorgungselemente zu einem Pack bzw. einem Paket von Versorgungselementen zusammengefasst werden, welche alle in dem Aufnahmebereich Platz finden.

Es wird darauf hingewiesen, dass es im Falle eines Brandmelders gesetzliche Vorschriften wie zum Beispiel die Norm EN54-25 geben kann, welche die Verwendung einer wieder aufladbaren Batterie verbieten.

Durch die Möglichkeit mit ein und demselben Gefahrmelder verschieden große Versorgungselemente zu verwenden, können auf einfache und effektive Weise unterschiedlich ergiebige Stromversorgungen von batteriebetriebenen Gefahrmeldern realisiert werden. Dabei können die eigentliche Detektoreinheit und die beiden Gehäuseteile für sämtliche Typen von Versorgungselementen ohne Anpassungen eingesetzt werden. Das Volumenanpassungselement kann in Abhängigkeit von der Art und Größe des oder der Versorgungselemente unterschiedlich groß bzw. unterschiedlich hoch sein. Somit kann ein und derselbe Gefahrmelder für beliebige Bereiche der Gefahrmeldetechnik ohne großen Aufwand hinsichtlich (a) der gewünschten Batteriewechsel-Intervalle, (b) des zur Verfügung stehenden und/oder gewünschten Einbauraums und (c) der Herstellungskosten mit einem hinsichtlich der Größe optimal angepassten Aufnahmebereich ausgestattet werden.

Gemäß der Erfindung ist das Volumenanpassungselement ein Zwischenelement, welches zwischen dem ersten Gehäuseteil und dem zweiten Gehäuseteil einbringbar ist.

So kann der beschriebene Gefahrmelder mit unterschiedlichen Versorgungselementen betrieben und dabei jeweils ein geeignetes Volumen für das Aufnahmebereich eingestellt werden. Der Gefahrmelder kann somit mit verschiedenen Versorgungselementen jeweils in einer räumlich besonders kompakten Form betrieben werden, wobei unnötige Hohlräume in dem Aufnahmebereich auf effektive Weise vermieden werden können.

Das Gehäuse des beschriebenen Gefahrmelders mit den beiden Gehäuseteilen kann somit für ein vorgegebenes kleinstes Versorgungselement bzw. für ein kleinstes Pack aus Versorgungselementen mit einer minimalen Batterielebensdauer konstruiert werden, welche für die Erfüllung der für batteriebetriebene Brandmelder relevanten gesetzlichen Vorschrift, der Norm EN54-25, nötig ist. Falls von dem Kunden bzw. dem Betreiber des Gefahrmelders eine längere Lebensdauer des oder der Versorgungselemente gewünscht wird, kann der Gefahrmelder mit entsprechend größeren Versorgungselementen betrieben werden. Damit das oder die größeren Versorgungselemente in das gleiche Aufnahmebereich passen, wird das beschriebene Zwischenelement zwischen die beiden Gehäuseteile eingesetzt. Auf diese Weise kann das Aufnahmebereich abhängig von der Größe des Zwischenelements abhängig von dem oder von den zu verwendenden Versorgungselementen in geeigneter Weise erweitert werden.

Gemäß einem weiteren Ausführungsbeispiel der Erfindung sind die beiden Gehäuseteile ferner derart ausgebildet, dass das zweite Gehäuseteil direkt mit der ersten Gehäuseteil verbindbar ist. Dies hat den Vorteil, dass der beschriebene Gefahrmelder auch ohne ein Zwischenelement betrieben werden kann. Dabei sind die beiden Gehäuseteile zweckmäßigerweise derart ausgebildet, dass der ohne ein Zwischenelement gebildete Aufnahmebereich gerade an das oder an die typischerweise kleinsten zu verwendenden Versorgungselemente angepasst ist.

Gemäß einem weiteren Ausführungsbeispiel der Erfindung sind das erste Gehäuseteil und/oder das zweite Gehäuseteil mit einem Schnellverschluss ausgestattet.

Die Verwendung eines Schnellverschlusses, welcher beispielsweise als Bajonettverschlusses ausgebildet sein kann, hat den Vorteil, dass die beiden Gehäuseteile auf einfache und schnelle Weise miteinander verbunden werden können. Auch das oben beschriebene Zwischenelement kann in analoger Weise ausgebildet sein, so dass nach einem Wechsel des zumindest einen Versorgungselements die Größe des Aufnahmebereichs schnell an die Größe des zu verwendenden zumindest einen Versorgungselements angepasst werden kann und der gesamte Gefahrmelder zügig mit wenigen Handbewegungen zusammengesetzt werden kann.

Bevorzugt ist der Schnellverschluss derart ausgebildet und derart an dem ersten Gehäuseteil und/oder dem zweiten Gehäuseteil angeordnet, dass die Detektoreinheit zusammen mit dem zumindest einen Versorgungselement mittels einer speziellen Aufnahmemechanik, die beispielsweise an einer Stange angebracht sein kann, aus einem Sockel abgenommen werden kann, welcher sich üblicherweise an der Decke eines zu überwachenden Raumes befindet. Selbstverständlich gilt das Gleiche auch für ein Einsetzen der Detektoreinheit zusammen mit dem Versorgungselement in einen geeigneten Aufnahmesockel. Die Verwendung einer Stange har dabei den Vorteil, dass zum Austauschen der Detektoreinheit und/oder des zumindest einen Versorgungselements eine für die entsprechende Bedienperson vorgesehene Leiter nicht erforderlich ist. Das Einhängen bzw. das Entnehmen der Detektoreinheit zusammen mit dem Versorgungselement kann beispielsweise durch eine geeignete Drehbewegung erfolgen.

Gemäß einem weiteren Ausführungsbeispiel der Erfindung ist die Detektoreinheit ferner eingerichtet zum Erfassen einer zumindest indirekten mechanischen Verbindung zwischen den beiden Gehäuseteilen. Dies hat den Vorteil, dass ein Betrieb des Gefahrmelders ohne das zweite Gehäuseteil ausgeschlossen werden kann und/oder dass bei einem Entfernen des zweiten Gehäuseteils zumindest während einer bestimmten Zeitdauer, welche die für einen üblichen Batteriewechsel erforderliche Zeit deutlich überschreitet, eine entsprechende Alarm- bzw. Warnmeldung ausgegeben werden kann.

Bei einem Brandmeldesystem, bei dem der Gefahrmelder über Funk mit einer Zentrale verbunden ist, kann dadurch wirksam verhindert werden, dass ein Benutzer absichtlich oder aus Nachlässigkeit die Detektoreinheit von dem fest an der Decke eines zu überwachenden Raumes angebrachten zweiten Gehäuseteils entfernt und die Detektoreinheit in einen Bereich des Raumes bringt, an der in einem Brandfall keine oder nur eine deutlich retardierte Rauchentwicklung entsteht. Ein derartiger Bereich ist beispielsweise eine geschlossene Schublade, in die im Brandfall kaum Rauch eindringen wird. In einem solchen Fall würde nämlich die Detektoreinheit an die Zentrale des Brandmeldesystems in regelmäßigen Abständen ein Signal senden, mit dem auch dann der Zentrale ein Nichtvorhandensein von Rauch angezeigt würde, wenn tatsächlich schon Rauch in den Raum aber (noch) nicht in den rauchfreien Bereich des Raumes eingedrungen ist.

Gemäß einem weiteren Ausführungsbeispiel der Erfindung ist der elektrische Anschluss in oder an dem ersten Gehäuseteil angeordnet. Dies hat den Vorteil, dass sämtlich elektrischen Komponenten des beschriebenen Gefahrmelders lediglich in oder an dem ersten Gehäuseteil angeordnet sein können. Das zweite Gehäuseteil kann dann auf einfache Weise bzw. durch einen einfachen Spritzgießvorgang hergestellt werden. Weitere Herstellungsprozesse sind dann für das zweite Gehäuseteil nicht mehr zwingend erforderlich.

Gemäß einem weiteren Ausführungsbeispiel der Erfindung ist das zweite Gehäuseteil ein Halteelement, welches derart ausgebildet ist, dass es an einer Wand und insbesondere an einer Decke eines zu überwachenden Raumes anbringbar ist.

Das Halteelement kann beispielsweise ein Sockel des Gefahrmelders sein. An dem Halteelement können ferner Bohrungen vorgesehen sein, so dass das Halteelement beispielsweise mittels Schrauben insbesondere an der Decke des zu überwachenden Raumes angebracht werden kann.

Gemäß einem weiteren Ausführungsbeispiel der Erfindung ist die Detektoreinheit eingerichtet (a) zum Detektieren von Rauch, (b) zum Detektieren von Temperaturänderungen, (c) zum Detektieren von zumindest einem Gas, (d) zum Detektieren von zumindest einer Flüssigkeit, und/oder (e) zum Detektieren von in einen überwachten Raum unerlaubt eindringenden Personen oder Gegenständen. Dies hat den Vorteil, dass der beschriebene Gefahrmelder zum Erkennen von verschiedenartigen Gefahrensituationen verwendet werden kann. Die Detektoreinheit kann jeweils in geeigneter Weise mit entsprechenden optischen und/oder chemischen Detektionssystemen ausgestattet sein. Im Falle eines Rauchmelders, welcher wohl den am häufigsten verwendeten Gefahrmelder darstellt, kann in bekannter Weise das Prinzip der Streulichtmessung an Rauchpartikeln für eine zuverlässige Rauch- bzw. Branddetektion angewendet werden.

Gemäß einem weiteren Ausführungsbeispiel der Erfindung weist die Detektoreinheit einen Mikroprozessor auf, welcher derart programmiert ist, dass der Gefahrmelder unabhängig von der Verwendung eines Zwischenelements und/oder unabhängig von der Höhe eines eingebrachten Zwischenelementes mit einer einheitlichen Konfiguration betreibbar ist.

Damit kann der Gefahrmelder von jeder beliebigen Person umgebaut werden, ohne dass dabei spezielle Kenntnisse bzgl. einer Änderung von Parameterwerten erforderlich sind, welche beispielsweise die Empfindlichkeit des Gefahrmelders für das Auslösen einer Gefahrmeldung bestimmen. Insbesondere bei einem Rauchmelder kann die Empfindlichkeit, die üblicherweise über Parameter eines Auswertealgorithmus eingestellt werden, von der Beabstandung der Detektoreinheit von der Decke eines zu überwachenden Raumes abhängen. Dies liegt daran, dass sich im Brandfall der Rauch einer Rauchquelle, die sich üblicherweise am Boden oder zumindest in einem bodennahen Bereich befindet, nicht bis unmittelbar unter die Decke ausbreitet. Vielmehr befindet sch unmittelbar unter der Decke ein Luftpolster bzw. ein Luftkissen, welches zumindest für einige Zeit nicht von Rauch durchdrungen wird. Daher hängt die einzustellende Empfindlichkeit bei bekannten Rauchmeldern nicht unerheblich von der jeweiligen Beabstandung zwischen der Detektoreinheit und der Raumdecke ab.

Bei dem beschriebenen Gefahrmelder wird die Programmierung des Mikroprozessors durch eine geeignete Wahl von Parameterwerten so gewählt, dass auch bei einer Veränderung der Bauhöhe, die durch die Verwendung von unterschiedlichen Zwischenelementen erfolgen kann, die Schwelle für das Auslösen einer Gefahrmeldung nicht an die neue Bauhöhe bzw. an den neuen Abstand zwischen der Detektoreinheit und der Decke des zu überwachenden Raumes angepasst werden muss. Dies bedeutet selbstverständlich, dass die entsprechenden für den beschriebenen Gefahrmelder verwendeten Parameterwerte zumindest für einige Bauhöhen einen Kompromiss zwischen einer optimalen Empfindlichkeit und einer einfachen Veränderbarkeit der Größe des Aufnahmebereiches darstellen.

Gemäß einem weiteren Aspekt der Erfindung wird ein Volumenanpassungselement für einen Gefahrmelder des oben beschriebenen Typs beschrieben. Das Volumenanpassungselement weist auf (a) eine erste Schnittstelle, welche derart ausgebildet ist, dass das Volumenanpassungselement mit dem ersten Gehäuseteil mechanisch verbindbar ist, und/oder (b) eine zweite Schnittstelle, welche derart ausgebildet ist, dass das Volumenanpassungselement mit dem zweiten Gehäuseteil mechanisch verbindbar ist.

Dem beschriebenen Volumenanpassungselement liegt die Erkenntnis zugrunde, dass das Volumen des Aufnahmebereichs gezielt an das aktuell verwendete Versorgungselement angepasst werden kann. Das Volumenanpassungselement kann beispielsweise das effektiv nutzbare Volumen des Aufnahmebereiches gezielt reduzieren, so dass ein unbeabsichtigtes und unkontrolliertes Bewegen von zumindest einem Versorgungselement, welches kleiner ist als der Aufnahmebereich, innerhalb des Aufnahmebereiches verhindert werden. Auf diese Weise kann beispielsweise gewährleistet werden, dass ein in den Aufnahmebereich eingelegtes Versorgungselements stets mit entsprechenden Kontakten des elektrischen Anschlusses in Kontakt bleibt.

Gemäß der Erfindung ist das Volumenanpassungselement ein Zwischenelement, welches mit dem ersten Gehäuseteil und dem zweiten Gehäuseteil mechanisch verbindbar ist.

Gemäß der Erfindung ist das Zwischenelement als Zwischenring ausgebildet. Dies hat den Vorteil, dass das Zwischenelement für viele bereits bekannte und auch für bereits auf dem Markt befindliche Gefahrmelder mit einem runden Chassis verwendet werden kann. Dabei ist der Zwischenring hinsichtlich seines Durchmessers und hinsichtlich seiner Formgebung an die jeweiligen Gehäuseteile der bereits bekannten Gefahrmelder angepasst.

Gemäß einem weiteren Ausführungsbeispiel der Erfindung weist das Zwischenelement einen Schnellverschluss auf.

Die Verwendung eines Schnellverschlusses an dem Zwischenelement hat den Vorteil, dass die beiden Gehäuseteile auf einfache und schnelle Weise an das Zwischenelement angekoppelt werden können. Somit kann nach einem Wechsel des zumindest einen Versorgungselements die Größe des Aufnahmebereichs schnell an die Größe des nachfolgend zu verwendenden zumindest einen Versorgungselements angepasst werden und der gesamte Gefahrmelder kann auf einfache Weise zusammengesetzt werden.

Der an dem Zwischenelement angebrachte Schnellverschluss kann ebenfalls beispielsweise als Bajonettverschluss ausgebildet sein. Dies hat den Vorteil, dass mittels einer einfachen Drehbewegung eine zuverlässige mechanische Verbindung zwischen dem Zwischenelement und dem jeweiligen Gehäuseteil hergestellt werden kann.

Es wird darauf hingewiesen, dass selbstverständlich auch beliebige andere mechanische Verschlüsse zum Verbinden des Zwischenelements mit den beiden Gehäuseteilen verwendet werden können.

Gemäß einem weiteren Aspekt der Erfindung wird ein Verfahren zum Nachrüsten eines Gefahrmelders des oben beschriebenen Typs mit einem Volumenanpassungselement des oben beschriebenen Typs angegeben. Bei dem angegebenen Nachrüstverfahren wird das Volumenanpassungselement mit dem ersten Gehäuseteil und/oder mit dem zweiten Gehäuseteil gekoppelt, so dass das Volumen des Aufnahmebereiches verändert wird.

Auch dem beschriebenen Verfahren liegt die Erkenntnis zugrunde, dass durch die Verwendung eines in geeigneter Weise ausgestalteten Volumenanpassungselementes das Volumen des Aufnahmebereichs gezielt an das aktuell verwendete Versorgungselement angepasst werden kann.

Weitere Vorteile und Merkmale der vorliegenden Erfindung ergeben sich aus der folgenden beispielhaften Beschreibung einer derzeit bevorzugten Ausführungsform.

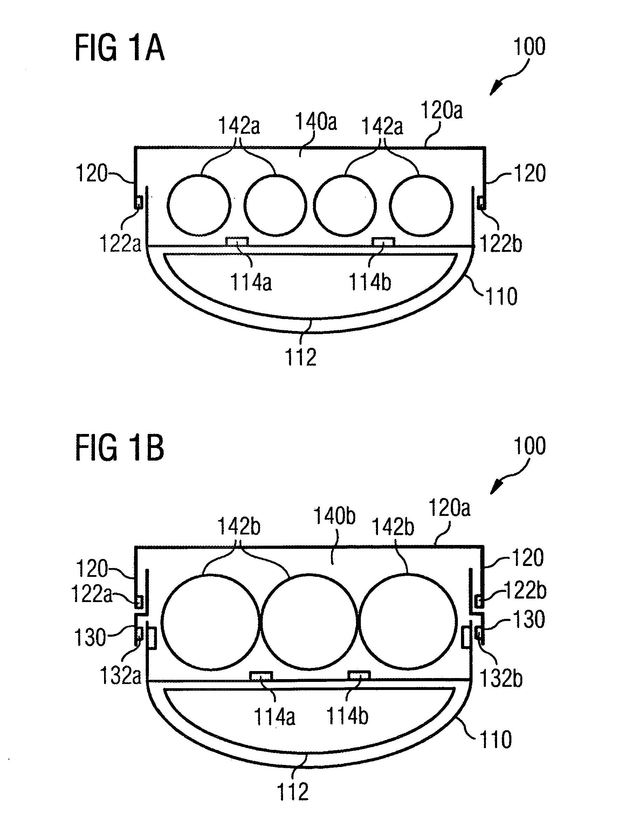

Figur 1a zeigt einen Brandmelder mit einem ersten Batterie-Paket, welches sich in einem durch zwei Gehäuseteile gebildeten Aufnahmebereich befindet.

Figur 1b zeigt den in Figur 1 dargestellten Brandmelder, bei dem das Volumen des Aufnahmebereichs mittels eines Zwischenelements vergrößert wurde.

An dieser Stelle bleibt anzumerken, dass sich in der Zeichnung die Bezugszeichen von gleichen oder von einander entsprechenden Komponenten lediglich durch einen angehängten Buchstaben unterscheiden.

Die beiden Figuren 1a und 1b zeigen einen als Brandmelder ausgebildeten Gefahrmelder 100. In Figur 1a ist der Brandmelder 100 mit einem herkömmlichen Aufnahmebereich 140a dargestellt, welcher zur Aufnahme von insgesamt vier Versorgungselementen 142a vorgesehen ist. Gemäß dem hier dargestellten Ausführungsbeispiel sind die Versorgungselemente Batterien 142a. In Figur 1b ist der Brandmelder 100 mit einem vergrößerten Aufnahmebereich 140b dargestellt, welcher zur Aufnahme von insgesamt drei ebenfalls als Batterien ausgebildeten Versorgungselementen 142a vorgesehen ist.

Wie aus einem Vergleich der beiden Figuren 1a und 1b direkt ersichtlich, sind die drei Batterien 142b deutlich größer als die vier Batterien 142a. Ferner ist die Leistungsfähigkeit der drei Batterien 142b größer als die Leistungsfähigkeit der vier Batterien 142a, so dass die Batteriewechsel-Intervalle des in Figur 1b dargestellten Brandmelders deutlich länger sind als die Batteriewechsel-Intervalle des in Figur 1a dargestellten Brandmelders. Dies gilt zumindest bei ansonsten gleichen Betriebsbedingungen wie insbesondere der Häufigkeit von Alarmauslösungen und/oder der Qualität der Funkstrecke zu einer nicht dargestellten Brandmeldezentrale.

Der Aufnahmebereich 140a des in Figur 1a dargestellten Brandmelders 100 wird durch zwei Gehäuseteile, ein erstes Gehäuseteil 110 und ein zweites Gehäuseteil 120, definiert. Der vergrößerte Aufnahmebereich 140b des in Figur 1b dargestellten Brandmelders 100 wird durch die beiden Gehäuseteile 110 und 120 und zusätzlich durch ein Zwischenelement 130 definiert, welches zwischen die beiden Gehäuseteile 110 und 120 eingebracht ist. Gemäß Der erfindung ist die Form des Zwischenelements 130 auf die aus den Figuren 1a und 1b nicht ersichtliche Kreisform des Gefahrmelders 100 angepasst, so dass es sich bei dem Zwischenelement um einem Zwischenring 130 handelt. wiesen, dass sich der

Gemäß dem hier dargestellten Ausführungsbeispiel ist innerhalb des ersten Gehäuseteils 110 eine Detektoreinheit 112 angeordnet. Die Detektoreinheit 112 kann jede beliebige Messeinheit zum Erfassen von Gefahrensituationen sein. Gemäß dem hier dargestellten Ausführungsbeispiel weist die Detektoreinheit 112 einen optischen Streulichtsensor auf, welcher ein Vorhandensein von Rauch durch ein Streulicht feststellt, welches durch Streuung von Messlicht an Rauchpartikeln entsteht und üblicherweise von einem als Photodiode ausgebildeten Lichtempfänger erfasst wird.

Zur Versorgung der Detektoreinheit 112 mit elektrischer Energie ist an dem ersten Gehäuseteil 110 ferner ein elektrischer Anschluss vorgesehen, welcher gemäß dem hier dargestellten Ausführungsbeispiel zwei Anschlusskontakte 114a und 114b umfasst. Die beiden Anschlusskontakte 114a und 114b bilden mit nicht dargestellten Kontakten der in das Aufnahmefach 140a oder 140b eingelegten Batterien 142a bzw. 142b einen elektrischen Kontakt.

Gemäß dem hier dargestellten Ausführungsbeispiel ist das zweite Gehäuseteil 120 eine Halterung oder ein Sockel 120, die bzw. der fest an der Decke oder der Wand eines zu überwachenden Raumes angebracht werden kann. Die Befestigung an Decke bzw. Wand kann beispielsweise mittels Schrauben erfolgen. Dazu kann die Oberseite 120a des zweiten Gehäuseteils 120 mit geeigneten Bohrungen ausgestattet sein, durch welche die entsprechenden Befestigungsschrauben durchgeführt werden können.

Wie aus Figur 1a ersichtlich, ist an dem zweiten Gehäuseteil 120 ein Schnellverschluss vorgesehen, welcher zwei Eingriffselemente 122a und 122b umfasst. Die Eingriffselemente 122a und 122b können in zwei an dem ersten Gehäuseteil 110 in geeigneter Weise und an geeigneter Stelle ausgebildeten Öffnungen eingreifen. Diese Öffnungen sind aus Gründen der Übersichtlichkeit in den Figuren 1a und 1b nicht dargestellt.

Gemäß dem hier dargestellten Ausführungsbeispiel ist der Schnellverschluss ein z.B. Bajonettverschluss, so dass die beiden Gehäuseteile 110 und 120 auf einfache und schnelle Weise miteinander verbunden werden können. Selbstverständlich können die Eingriffselemente auch an dem zweiten Gehäuseteil 120 und die nicht dargestellten Öffnungen auch an dem ersten Gehäuseteil 110 angeordnet sein.

Wie aus Figur 1b ersichtlich, ist auch an dem Zwischenelement 130 ein Schnellverschluss vorgesehen, welcher zwei Eingriffselemente 132a und 132b umfasst. Die Eingriffselemente 132a und 132b können ebenso wie die Eingriffselemente 122a und 122b in die an dem ersten Gehäuseteil ausgebildeten Öffnungen eingreifen. An dem Zwischenelement 130 sind ferner zwei Öffnungen vorgesehen, in welche die an dem zweiten Gehäuseteil 120 ausgebildeten bzw. angebrachten Eingriffselemente 122a und 122b eingreifen können. Im Falle der Verwendung des Zwischenelements 130 zur Herstellung des vergrößerten Aufnahmebereichs 140b sind die beiden Gehäuseteile 110 und 120 somit mittels zweier Schnellverschlüssen indirekt über das Zwischenelement 130 verbunden.

Es wird darauf hingewiesen, dass die hier beschriebene Ausführungsform lediglich eine beschränkte Auswahl an möglichen Ausführungsvarianten der Erfindung darstellt.

## Patentansprüche

1. Gefahrmelder mit einem ersten Gehäuseteil (110), einem zweiten Gehäuseteil (120), einer Detektoreinheit (112) zum Detektieren einer Gefahrensituation, wobei die Detektoreinheit (112) in oder an dem ersten Gehäuseteil (110) angeordnet ist, einem elektrischen Anschluss (114a, 114b) zum Anschließen von zumindest einem Versorgungselement (142a, 142b), welches die Detektoreinheit (112) im Betrieb mit elektrischer Energie versorgt, und wobei das erste Gehäuseteil (110) zusammen mit dem zweiten Gehäuseteil (110) derart ausgebildet ist, dass zwischen den beiden Gehäuseteilen (110, 120) ein Aufnahmebereich für das zumindest eine Versorgungselement (142a, 142b) vorhanden ist,
**dadurch gekennzeichnet**, der gefahrmelder einen zwischen den beiden Gehäuseteilen (110, 120) einbringbaren zwischenring (130) aufweist und dass das volumen des aufnahmebereiches Mittels des zwischenrings (130) veränderbar ist.

2. Gefahrmelder nach Anspruch 1, wobei die beiden Gehäuseteile (110, 120) ferner derart ausgebildet sind, dass das zweite Gehäuseteil (120) direkt mit dem ersten Gehäuseteil (110) verbindbar ist.

3. Gefahrmelder nach Anspruch 2, wobei das erste Gehäuseteil (110) und/oder das zweite Gehäuseteil (120) mit einem Schnellverschluss (1122a, 122b) ausgestattet sind.

4. Gefahrmelder nach einem der vorangehenden Ansprüche, wobei die Detektoreinheit (112) ferner eingerichtet ist zum Erfassen einer zumindest indirekten mechanischen Verbindung zwischen den beiden Gehäuseteilen (110, 120).

5. Gefahrmelder nach einem der vorangehenden Ansprüche, wobei der elektrische Anschluss (114a, 114b) in oder an dem ersten Gehäuseteil (110) angeordnet ist.

6. Gefahrmelder nach einem der vorangehenden Ansprüche, wobei das zweite Gehäuseteil ein Halteelement (120) ist, welches derart ausgebildet ist, dass es an einer Wand und insbesondere an einer Decke eines zu überwachenden Raumes anbringbar ist.

7. Gefahrmelder nach einem der vorangehenden Ansprüche, wobei die Detektoreinheit (120) eingerichtet ist
- zum Detektieren von Rauch,
- zum Detektieren von Temperaturänderungen,
- zum Detektieren von zumindest einem Gas,
- zum Detektieren von zumindest einer Flüssigkeit, und/oder
- zum Detektieren von in einen überwachten Raum unerlaubt eindringenden Personen oder Gegenständen.

8. Gefahrmelder nach einem der Ansprüche 1 bis 7, wobei die Detektoreinheit (112) einen Mikroprozessor aufweist, welcher derart programmiert ist, dass der Gefahrmelder (100)
- unabhängig von der Verwendung eines Zwischenrings (130) und/oder
- unabhängig von der Höhe eines eingebrachten Zwischenrings (130) mit einer einheitlichen Konfiguration betreibbar ist.

9. Zwischenring für einen Gefahrmelder nach einem der Ansprüche 1 bis 8, wobei der Zwischenring (130) mit dem ersten Gehäuseteil (110) und dem zweiten Gehäuseteil (120) mechanisch verbindbar ist, wobei der Zwischenring (130) eine erste Schnittstelle aufweist, welche derart ausgebildet ist, dass der Zwischenring (130) mit dem ersten Gehäuseteil (110) des Gefahrenmelders (100) mechanisch verbindbar ist, und eine zweite Schnittstelle aufweist, welche derart ausgebildet ist, dass der Zwischenring (130) mit dem zweiten Gehäuseteil (120) mechanisch verbindbar ist.

10. Zwischenring nach Anspruch 9, wobei der Zwischenring (130) einen Schnellverschluss (132a, 132b) aufweist.

11. Verfahren zum Nachrüsten eines Gefahrmelders (100) nach einem der Ansprüche 1 bis 8 mit einem Zwischenring (130) nach Anspruch 9 oder 10, wobei der Zwischenring (130) mit dem ersten Gehäuseteil (110) und/oder mit dem zweiten Gehäuseteil (120) gekoppelt wird, so dass das Volumen des Aufnahmebereiches verändert wird.

## Claims

1. Hazard alarm, having a first housing part (110), a second housing part (120), a detector unit (112) for detecting a hazard situation, wherein the detector unit (112) is disposed in or on the first housing part (110), an electrical connection (114a, 114b) for connecting at least one supply element (142a, 142b), which supplies the detector unit (112) with electrical energy during operation, and wherein the first housing part (110) together with the second housing part (110) is configured so that a holding region for the at least one supply element (142a, 142b) is present between the two housing parts (110, 120),
**characterised in that** the hazard alarm features an intermediate ring (130), which can be introduced between the two housing parts (110, 120) and the volume of the holding region can be changed by means of the intermediate ring (130).

2. Hazard alarm according to claim 1, wherein
the two housing parts (110, 120) are further configured so that the second housing part (120) can be connected directly to the first housing part (110).

3. Hazard alarm according to claim 2, wherein
the first housing part (110) and/or the second housing part (120) are fitted with a quick release fastener (1122a, 122b).

4. Hazard alarm according to one of the preceding claims,
wherein the detector unit (112) is also set up to detect an at least indirect mechanical connection between the two housing parts (110, 120).

5. Hazard alarm according to one of the preceding claims, wherein the electrical connection (114a, 114b) is disposed in or on the first housing part (110).

6. Hazard alarm according to one of the preceding claims, wherein the second housing part is a retaining element (120), which is configured so that it can be attached to a wall and in particular to a ceiling of a space to be monitored.

7. Hazard alarm according to one of the preceding claims, wherein the detector unit (120) is set up
- to detect smoke,
- to detect temperature changes,
- to detect at least one gas,
- to detect at least one fluid, and/or
- to detect persons or objects entering a monitored space without permission.

8. Hazard alarm according to one of claims 1 to 7, wherein the detector unit (112) features a microprocessor, which is programmed in such a manner that the hazard alarm (100) can be operated with a standard configuration
- independently of the use of an intermediate ring (130) and/or
- independently of the height of an inserted intermediate ring (130).

9. Intermediate ring for a hazard alarm according to one of claims 1 to 8, it being possible for the intermediate ring (130) to be connected mechanically to the first housing part (110) and to the second housing part (120), the intermediate ring (130) featuring a first interface, which is configured so that the intermediate ring (130) can be connected mechanically to the first housing part (110) of the hazard alarm (100), and featuring a second interface, which is configured so that the intermediate ring (130) can be connected mechanically to the second housing part (120).

10. Intermediate ring according to claim 9, wherein
the intermediate ring (130) features a quick release fastener (132a, 132b).

11. Method for retrofitting a hazard alarm (100) according to one of claims 1 to 8 with an intermediate ring (130) according to claim 9 or 10, wherein the intermediate ring (130) is coupled to the first housing part (110) and/or to the second housing part (120), so that the volume of the holding region is changed.

## Revendications

1. Avertisseur de danger comprenant une première partie ( 110 ) de boîtier, une deuxième partie ( 120 ) de boîtier, une unité ( 112 ) formant détecteur pour la détection d'une situation de danger, l'unité ( 112 ) formant détecteur étant disposée dans ou sur la première partie ( 110 ) de boîtier, une borne ( 114a ; 114b ) électrique pour la connexion d'au moins un élément ( 142a, 142b ) d'alimentation qui en fonctionnement alimente en énergie électrique l'unité ( 112 ) formant détecteur, et dans lequel la première partie ( 110 ) de boîtier est constituée ensemble avec la deuxième partie ( 110 ) de boîtier de manière à ce qu'il y ait entre les deux parties ( 110, 120 ) de boîtier une zone de réception d'au moins un élément ( 142a, 142b ) d'alimentation,
**caractérisé en ce que** l'avertisseur de danger a un anneau ( 130 ) intermédiaire pouvant être mis entre les deux parties ( 110, 120 ) de boîtier et **en ce que** le volume de la zone de réception peut être modifié au moyen de l'anneau ( 130 ) intermédiaire.

2. Avertisseur de danger suivant la revendication 1, dans lequel les deux parties ( 110, 120 ) de boîtier sont constituées en outre de manière à ce que la deuxième partie ( 120 ) de boîtier puisse être assemblée directement à la première partie ( 110 ) de boîtier.

3. Avertisseur de danger suivant la revendication 2, dans lequel la première partie ( 110 ) de boîtier et/ou la deuxième partie ( 120 ) de boîtier sont équipées d'une fermeture ( 1122a, 122b ) rapide.

4. Avertisseur de danger suivant l'une des revendications précédentes, dans lequel l'unité ( 112 ) formant détecteur est conçue en outre pour détecter un assemblage mécanique au moins indirect entre les deux parties ( 110, 120 ) de boîtier.

5. Avertisseur de danger suivant l'une des revendications précédentes, dans lequel la borne ( 114a, 114b ) électrique est disposée dans ou sur la première partie ( 110 ) du boîtier.

6. Avertisseur de danger suivant l'une des revendications précédentes, dans lequel la deuxième partie du boîtier est un élément ( 120 ) de maintien qui est tel qu'il peut être mis sur une paroi et notamment sur une partie supérieure d'un espace à surveiller.

7. Avertisseur de danger suivant l'une des revendications précédentes, dans lequel l'unité ( 120 ) formant détecteur est conçue
- pour la détection de fumée,
- pour la détection de modifications de température,
- pour la détection d'au moins un gaz,
- pour la détection d'au moins un liquide et/ou
- pour la détection de personnes ou d'objets pénétrant sans autorisation dans un espace surveillé.

8. Avertisseur de danger suivant l'une des revendications 1 à 7, dans lequel l'unité ( 112 ) formant détecteur comporte un microprocesseur qui est programmé de manière à ce que l'avertisseur de danger puisse fonctionner
- indépendamment de l'utilisation d'un anneau ( 130 ) intermédiaire et/ou
- indépendamment de la hauteur d'un anneau ( 130 ) intermédiaire introduit ayant une configuration uniforme.

9. Anneau intermédiaire pour un avertisseur de danger suivant l'une des revendications 1 à 8, dans lequel l'anneau ( 130 ) intermédiaire peut être assemblé mécaniquement à la première partie ( 110 ) du boîtier et à la deuxième partie ( 120 ) du boîtier, l'anneau ( 130 ) intermédiaire ayant une première interface telle que l'anneau ( 130 ) intermédiaire peut être assemblé mécaniquement à la première partie ( 110 ) du boîtier de l'avertisseur ( 100 ) de danger et une deuxième interface telle que l'anneau intermédiaire peut être assemblé mécaniquement à la deuxième partie ( 120 ) du boîtier.

10. Anneau intermédiaire suivant la revendication 9, dans lequel l'anneau ( 130 ) intermédiaire a une fermeture ( 132a, 132b ) rapide.

11. Procédé pour rééquiper un avertisseur ( 100 ) de danger suivant l'une des revendications 1 à 8 d'un anneau ( 130 ) intermédiaire suivant la revendication 9 ou 10, dans lequel on couple l'anneau ( 130 ) intermédiaire à la première partie ( 110 ) du boîtier et/ou à la deuxième partie ( 120 ) du boîtier de manière à modifier le volume de la zone de réception.
